## Europäisches Patentamt
## European Patent Office
## Office européen des brevets

(19)

(11) Veröffentlichungsnummer: **0 157 239**
**B1**

(12) **EUROPÄISCHE PATENTSCHRIFT**

(45) Veröffentlichungstag der Patentschrift:
31.01.90

(51) Int. Cl.⁴: **G 01 D 5/36**

(21) Anmeldenummer: 85102842.3

(22) Anmeldetag: 13.03.85

(54) Positionsmesseinrichtung.

(30) Priorität: 31.03.84 DE 3412063

(43) Veröffentlichungstag der Anmeldung:
09.10.85 Patentblatt 85/41

(45) Bekanntmachung des Hinweises auf die Patenterteilung:
31.01.90 Patentblatt 90/5

(84) Benannte Vertragsstaaten:
AT CH DE FR GB IT LI NL SE

(56) Entgegenhaltungen:
EP-A- 0 126 211
US-A- 3 089 133
US-A- 3 483 391

(73) Patentinhaber: **Dr. Johannes Heidenhain GmbH,
Nansenstrasse 17, D-8225 Traunreut (DE)**

(72) Erfinder: **Dangschat, Holmer, Dipl.-Ing.,
Heinz-von-Stein-Strasse 25, D-8225 Traunreut (DE)**

## Beschreibung

Die Erfindung betrifft eine Positionsmeßeinrichtung gemäß dem Oberbegriff des Anspruches 1.

Bei Positionsmeßeinrichtungen ist es zur Ermittlung von Bezugspositionen bekannt, relativ zueinander bewegliche Maschinenteile oder Meßsystemteile aus einer Ausgangsposition bis zu einer Referenzmarke zu verfahren, um den bis dort zurückgelegten Wert zu ermitteln und zu speichern oder die Referenzmarke zur Bezugsposition mit dem Wert «Null» zu erklären. Ein solches Verfahren ist mit einer inkrementalen Längen- oder Winkelmeßeinrichtung möglich, wie sie in der DE-PS 19 64 381 beschrieben wird. Dieses Verfahren erfordert aber eine ungehinderte Relativbeweglichkeit der zu messenden Objekte, da die Bauteile der Meßeinrichtung fest mit den zu messenden Objekten verbunden sind und gemeinsam mit diesen bis zu einer Referenzmarke verstellt werden müssen.

Aus der DE-OS 16 73 887 ist eine Meßeinrichtung bei einer Maschine bekannt, die bei einem auf dem Maschinenbett festgeklemmten Maschinenschlitten die Ermittlung einer Bezugsposition erlaubt. Zuerst muß dort der Schlitten in diejenige Position gefahren werden, die später als Bezugsposition zu Null erklärt werden soll. Danach wird der Schlitten auf dem Maschinenbett festgeklemmt. Anschließend wird die Abtastplatte der Meßeinrichtung relativ zum Maßstab verfahren, bis eine Referenzmarke erreicht ist. Bei Erreichen der Referenzmarke wird der elektronische Zähler der Meßeinrichtung auf den Wert Null gesetzt. Sodann dann die Klemmung für den Maschinenschlitten wieder gelöst und der Schlitten in die gewünschte Position gefahren werden. Die Lage der Referenzmarke stellt also die Bezugsposition für die weiteren Arbeitsgänge dar.

Die bekannten Verfahren zur Ermittlung einer als Ausgangslage definierten Bezugsposition, die vor den eigentlichen Arbeitsvorgängen erfolgt, sind mit den beschriebenen inkrementalen Meßeinrichtungen jedoch dann nicht mehr möglich, wenn bereits Arbeitsgänge erfolgt sind und beispielsweise laufende Arbeitsgänge unterbrochen werden. Diese Unterbrechung eines laufenden Arbeitsvorganges, beispielsweise bei einem Handhabungsautomaten – im allgemeinen als Industrieroboter bezeichnet – ist durch Stromausfall möglich. Der Roboter bleibt dann in seiner momentanen Position stehen; der auf seine ursprüngliche Bezugsposition bezogene Meßwert geht aber durch den Stromausfall verloren, da auch die Messung unterbrochen wurde. Zur Fortführung des unterbrochenen Arbeitsvorganges müßte jedoch die Bezugsposition bekannt sein. Eine Rückbewegung des Roboters aus seiner Momentanposition in die ursprüngliche Ausgangslage scheidet aber in der Regel aus, weil beispielsweise gerade ein Werkzeug im Eingriff ist.

Der Erfindung liegt die Aufgabe zugrunde, eine Positionsmeßeinrichtung der genannten Gattung anzugeben, die die Nachteile der bekannten Einrichtungen beseitigt und es ermöglicht, nach Verlust der Lageinformation in unbekannten Momentanpositionen ohne Bewegung der zu messenden Objekte eine Bezugsposition zu reproduzieren.

Diese Aufgabe wird erfindungsgemäß durch die kennzeichnenden Merkmale des Anspruches 1 gelöst.

Die mit der Erfindung erzielten Vorteile bestehen insbesondere darin, daß die vorgeschlagene Positionsmeßeinrichtung auf einfache und schnelle Weise die Reproduktion einer Bezugsposition nach unterbrochenen Messungen und Bewegungen aus unbekannten Momentanpositionen erlaubt, ohne daß die zu messenden Objekte bewegt werden müssen. Ein solches zu messendes Objekt in Form eines Werkzeuges kann somit bei einer Unterbrechung des Meßvorganges und des Bearbeitungsvorganges durch eine Störung im Eingriff am Werkstück verbleiben, so daß nach Behebung der Störung und Wiederermittlung der Bezugsposition der unterbrochene Bearbeitungsvorgang unverzüglich wieder fortgesetzt werden kann. Ein Zurückziehen des Werkzeuges von der Eingriffstelle am Werkstück und ein erneutes genaues Wiederanfahren dieser Eingriffstelle ist zeitaufwendig und schwierig und kann zu Beschädigungen des Werkstückes führen. Ferner sind beispielsweise bei Industrierobotern programmgesteuerte Überprüfungen der jeweiligen Bezugspositionen zwischen einzelnen Arbeitsabläufen möglich, wodurch die Betriebssicherheit derartiger Systeme erheblich erhöht wird.

Vorteilhafte Ausbildungen der Erfindung entnimmt man den Unteransprüchen.

Ein Ausführungsbeispiel der Erfindung wird anhand der Zeichnung näher erläutert.

Es zeigen

Figur 1 eine Winkelmeßeinrichtung im Längsschnitt,

Figur 2 eine Ansicht eines Ausschnittes einer ersten Teilscheibe und

Figur 3 eine Ansicht eines Ausschnittes einer zweiten Teilscheibe.

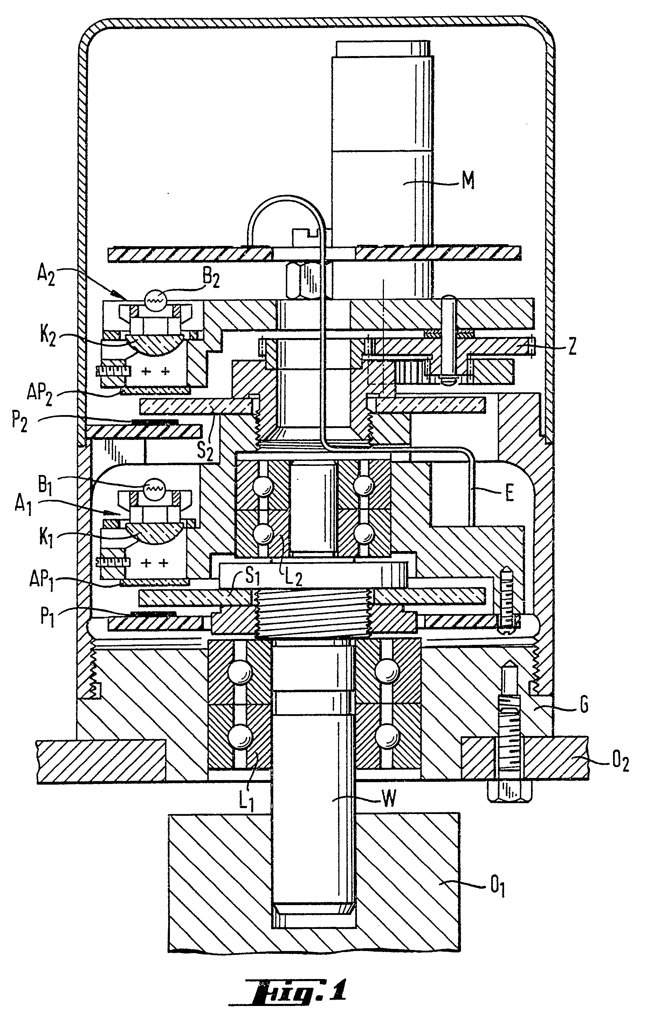

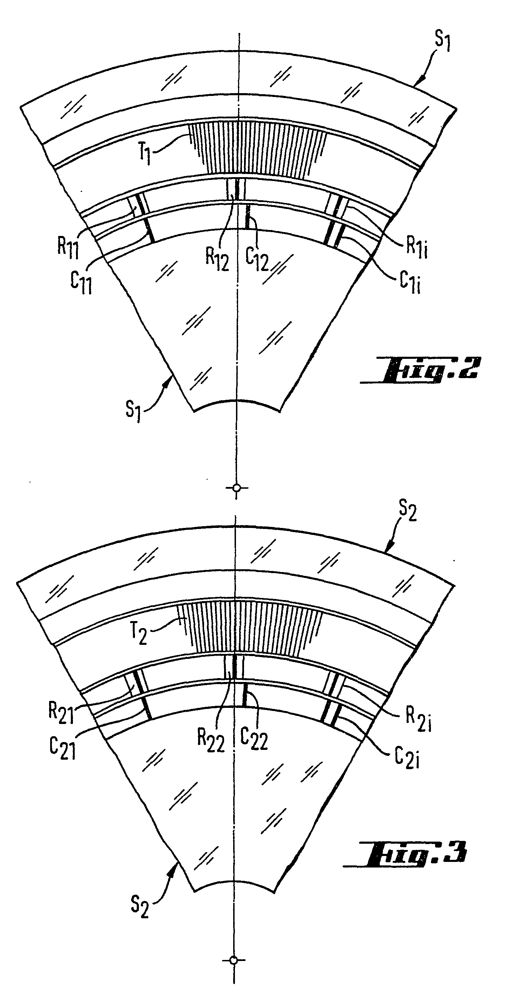

Die in Figur 1 im Längsschnitt dargestellte inkrementale Winkelmeßeinrichtung ist mit einem Gehäuse G an einem zweiten zu messenden Objekt $O_2$, beispielsweise an einem Maschinenbett einer nicht gezeigten Bearbeitungsmaschine befestigt. Im Inneren des Gehäuses G ist eine Welle W mittels Lager $L_1$ drehbar gelagert und trägt eine erste Teilscheibe $S_1$ mit einer ersten Inkrementalteilung $T_1$ und mit der ersten Inkrementalteilung $T_1$ absolut zugeordneten ersten Referenzmarken $R_{1i}$ ($i = 1, 2, \ldots, n$), denen jeweils wiederum zur Identifizierung erste Codemarken $C_{1i}$ zugeordnet sind (Figur 2). Die erste Inkrementalteilung $T_1$, die ersten Referenzmarken $R_{1i}$ und die zugehörigen ersten Codemarken $C_{1i}$ werden lichtelektrisch von einer ersten Abtasteinheit $A_1$ abgetastet, die eine erste Beleuchtungseinheit $B_1$, einen ersten Kondensor $K_1$, eine erste Abtastplatte $AP_1$ sowie erste Photoelemente $P_1$ aufweist.

Die erste Inkrementalteilung $T_1$ in Form eines Radialgitters besteht aus lichtdurchlässigen und lichtundurchlässigen Streifen, die abwechselnd aufeinander folgen. Der ersten Inkrementalteilung

$T_1$ ist auf der ersten Abtastplatte $AP_1$ ein erstes Teilungsabtastfeld zugeordnet, dessen Teilung mit der ersten Inkrementalteilung $T_1$ identisch ist. Die ersten Referenzmarken $R_{1i}$ bestehen jeweils aus identischen Strichgruppen mit einer bestimmten unregelmäßigen Strichverteilung, denen auf der ersten Abtastplatte $AP_1$ ein erstes Referenzmarkenabtastfeld mit einer identischen Strichverteilung zugeordnet ist. Die absoluten Positionen der ersten Referenzmarken $R_{1i}$ zum Teilungsnullpunkt der ersten Inkrementalteilung $T_1$ werden durch die zugehörigen ersten Codemarken $C_{1i}$ gekennzeichnet, die jeweils die Absolutpositionen der zugehörigen ersten Referenzmarken $R_{1i}$ als codierte Information, beispielsweise als sogenannten Barcode enthalten. Den ersten Codemarken $C_{1i}$ ist auf der ersten Abtastplatte $AP_1$ ein erstes Codemarkenabtastfeld zugeordnet. Der ersten Inkrementalteilung $T_1$, den ersten Referenzmarken $R_{1i}$ und den ersten Codemarken $C_{1i}$ sowie den zugehörigen ersten Abtastfeldern ist jeweils ein erstes Photoelement $P_1$ zugeordnet.

Die aus dem Gehäuse G herausragende Welle W ist mit einem ersten zu messenden Objekt $O_1$ in Form der Spindel eines Maschinenschlittens der Bearbeitungsmaschine verbunden. Auf der Welle W ist im Gehäuse G die erste Abtasteinheit $A_1$ mittels Lager $L_2$ relativ zum Gehäuse G und zur ersten Teilscheibe $S_1$ drehbar gelagert.

Beim eigentlichen Meßvorgang wird bei einer Drehung der Welle W und damit der ersten Teilscheibe $S_1$ bei bezüglich des Gehäuses G ortsfester erster Abtasteinheit $A_1$ die erste Inkrementalteilung $T_1$ relativ zum zugehörigen ersten Teilungsabtastfeld aus der stillstehenden ersten Abtastplatte $AP_1$ gedreht. Der von der ersten Beleuchtungseinheit $B_1$ ausgehende Lichtstrom wird durch die relativ zueinander bewegten Teilungen der ersten Inkrementalteilung $T_1$ und des ersten Teilungsabtastfeldes moduliert und fällt auf das zugehörige erste Photoelement $P_1$, das ein periodisches Analogsignal liefert, das in einer nicht gezeigten Auswerteeinrichtung der Winkelmeßeinrichtung in Impulse umgeformt wird. Diese Impulse werden über einen ersten Eingang einem Differenzzähler der Auswerteeinrichtung zur Zählung zugeführt und können in einer nachgeschalteten Anzeigeeinheit als Positionsmeßwerte in digitaler Form angezeigt oder direkt einer numerischen Steuereinrichtung der Bearbeitungsmaschine zugeführt werden. Zur Diskriminierung der Drehrichtung der ersten Teilscheibe $S_1$ weist das erste Teilungsabtastfeld der ersten Abtastplatte $AP_1$ zwei zueinander um ein Viertel der Teilungsperiode der ersten Inkrementalteilung $T_1$ versetzte Teilungen auf.

An der auf der Welle W drehbar gelagerten ersten Abtasteinheit $A_1$ ist eine zweite Teilscheibe $S_2$ mit einer zweiten Inkrementalteilung $T_2$ und mit der zweiten Inkrementalteilung $T_2$ absolut zugeordneten zweiten Referenzmarken $R_{2i}$ ($i = 1, 2, \ldots,$ n) befestigt, denen wiederum zur Identifizierung jeweils zweite Codemarken $C_{2i}$ zugeordnet sind (Figur 3). Die zweite Inkrementalteilung $T_2$, die zweiten Referenzmarken $R_{2i}$ und die zugehörigen zweiten Codemarken $C_{2i}$ werden lichtelektrisch von einer zweiten Abtasteinheit $A_2$ abgetastet, die ortsfest im Gehäuse G angebracht ist und eine zweite Beleuchtungseinheit $B_2$, einen zweiten Kondensor $K_2$, eine zweite Abtastplatte $AP_2$ sowie zweite Photoelemente $P_2$ aufweist.

Die zweite Inkrementalteilung $T_2$, die zweiten Referenzmarken $R_{2i}$ und die zweiten Codemarken $C_{2i}$ der zweiten Teilscheibe $S_2$ stimmen jeweils mit der ersten Inkrementalteilung $T_1$, den ersten Referenzmarken $R_{1i}$ sowie den ersten Codemarken $C_{1i}$ der ersten Teilscheibe $S_1$ überein. Auf der zweiten Abtastplatte $AP_2$ sind der zweiten Inkrementalteilung $T_2$ ein zweites Teilungsabtastfeld, den zweiten Referenzmarken $R_{2i}$ ein zweites Referenzmarkenabtastfeld und den zweiten Codemarken $C_{2i}$ ein zweites Codemarkenabtastfeld zugeordnet; die Abtastfelder der zweiten Teilscheibe $S_2$ stimmen mit den Abtastfeldern der ersten Teilscheibe $S_1$ überein. Der zweiten Inkrementalteilung $T_2$, den zweiten Referenzmarken $R_{2i}$ und den zweiten Codemarken $C_{2i}$ sowie den zugehörigen Abtastfeldern ist jeweils ein zweites Photoelement $P_2$ zugeordnet. Zur Diskriminierung der Drehrichtung der zweiten Teilscheibe $S_2$ weist das zweite Teilungsabtastfeld auf der zweiten Abtastplatte $AP_2$ zwei zueinander um ein Viertel der Teilungsperiode der zweiten Inkrementalteilung $T_2$ versetzte Teilungen auf.

Bei einer inkrementalen Meßeinrichtung ist es jedoch von großer Bedeutung, zu Beginn einer Messung die Bezugsposition zu bestimmen, die als Ausgangsposition für die Messungen dient und die auch nach Störfällen wieder reproduziert werden kann.

Es wird davon ausgegangen, daß sich vor Beginn einer Messung oder auch im Störfall, bei dem – beispielsweise durch Stromausfall – bekanntlich bei inkrementalen Positionsmeßeinrichtungen der Positionsmeßwert verloren geht, die relativ zueinander beweglichen, zu messenden Objekte $O_1$, $O_2$ im Stillstand befinden. Die erste Teilscheibe $S_1$ befindet sich also in einer unbekannten Momentanposition, in der die Lage ihres Teilungsnullpunktes relativ zum Gehäuse G nicht bekannt ist.

Zur Gewinnung der Bezugsposition muß nun die momentane Position der ersten Teilscheibe $S_1$ bezüglich des Gehäuses G bestimmt werden. Zu diesem Zweck wird in bekannter und daher nicht näher bezeichneter Weise der Differenzzähler in der Auswerteeinrichtung auf den Wert Null oder auf einen anderen Zahlenwert eingestellt und gleichzeitig die Eichbetriebsart eingeschaltet, indem die erste Abtasteinheit $A_1$ von einem im Gehäuse G befestigten Motor M über ein Reversiergetriebe Z in Drehung versetzt wird. Zuerst möge beispielsweise das zweite Referenzmarkenabtastfeld der ortsfesten zweiten Abtastplatte $AP_2$ eine zweite Referenzmarke $R_{21}$ auf der sich mit der ersten Abtasteinheit $A_1$ synchron drehenden zweiten Teilscheibe $S_2$ abtasten, so daß das zugehörige zweite Photoelement $P_2$ der ortsfesten zweiten Abtasteinheit $A_2$ ein Signal liefert, das in der Eichbetriebsart den Differenzzähler in der Auswerteeinrichtung startet. Von diesem Zeitpunkt an wird das vom zugehörigen zweiten Photoelement $P_2$ bei der Abtastung der zweiten Inkrementalteilung $T_2$ der sich drehenden zweiten Teilscheibe $S_2$ mittels des zugehörigen zweiten Teilungsabtastfeldes auf der ortsfesten zweiten Abtastplatte $AP_2$ erzeugte periodische Analogsignal ausgewertet und die Zählimpulse dem Differenzzähler über einen zweiten Eingang zugeführt.

Nach dem Zählerstart und dem Beginn der Zählung der Teilungsinkremente der zweiten Inkrementalteilung $T_2$ wird irgendwann die nächstgelegene erste Referenzmarke $R_{1i}$ auf der stillstehenden ersten Teilscheibe $S_1$ vom zugehörigen ersten Referenzmarkenabtastfeld auf der sich drehenden ersten Abtastplatte $AP_1$ abgetastet und durch ein Signal des zugehörigen ersten Photoelements $P_1$ der ersten Abtasteinheit $A_1$ die Zählung der Teilungsinkremente der ersten Inkrementalteilung $T_1$ der ersten Teilscheibe $S_1$ begonnen. Durch die gleichzeitige Zählung der Teilungsinkremente der ersten Inkrementalteilung $T_1$ und der zweiten Inkrementalteilung $T_2$ wird der Differenzzähler gestoppt, da die Differenz der beiden Zählfolgen Null ergibt. Gleichzeitig hat das erste Codemarkenabtastfeld auf der ersten Abtastplatte $AP_1$ aus der der abgetasteten ersten Referenzmarke $R_{1i}$ zugehörigen ersten Codemarke $C_{1i}$ den absoluten Positionswert der ersten Referenzmarke $R_{1i}$ abgelesen. Bei der Abtastung der zweiten Referenzmarke $R_{2i}$ wurde gleichzeitig aus der zugeordneten zweiten Codemarke $C_{2i}$ vom zugehörigen zweiten Codemarkenabtastfeld auf der zweiten Abtastplatte $AP_2$ der absolute Positionswert dieser zweiten Referenzmarke $R_{2i}$ abgelesen. Diese beiden absoluten Positionswerte der ersten Referenzmarke $R_{1i}$ und der zweiten Referenzmarke $R_{2i}$ werden in die Auswerteeinrichtung eingespeist. Dem absoluten Positionswert der ersten Referenzmarke $R_{1i}$ werden der absolute Positionswert der zweiten Referenzmarke $R_{2i}$ sowie der Zählwert im Differenzzähler, der dem Abstand zwischen den beiden Referenzmarken $R_{1i}$, $R_{2i}$ entspricht, vorzeichenrichtig überlagert. In der Auswerteeinrichtung steht nun der absolute Positionswert an, den die erste Teilscheibe $S_1$ zum Gehäuse G momentan einnimmt. Der Motor M wird stillgesetzt und der Eichvorgang ist damit beendet.

Der Differenzzähler wird jetzt für den eigentlichen Meßvorgang über den ersten Eingang mit den Zählimpulsen gespeist, die bei der Drehung der ersten Teilscheibe $S_1$ bezüglich des Gehäuses G bei der Abtastung der ersten Inkrementalteilung $T_1$ mittels des ersten Teilungsabtastfeldes auf der stillstehenden ersten Abtastplatte $AP_1$ und mittels des zugehörigen ersten Photoelementes $P_1$ erzeugt werden. Beim Auftreten von Störungen, beispielsweise bei Stromausfall, kann die Bezugsposition für die erste Teilscheibe $S_1$ sinngemäß mittels des vorbeschriebenen Eichvorgangs reproduziert werden, auch wenn die erste Teilscheibe $S_1$ nicht aus ihrer Momentanposition heraus bewegt werden kann, weil beispielsweise gerade ein Werkzeug, das über die Spindel der Bearbeitungsmaschine mit der Welle W in Wirkverbindung steht, im Eingriff an einem zu bearbeitenden Werkstück steht, wenn die Störung auftritt.

Bei der Beschreibung des Eichvorganges und des Reproduktionsvorganges wurde angenommen, daß die Welle W mit der ersten Teilscheibe $S_1$ bezüglich des Gehäuses G stillsteht; dies ist aber nicht Bedingung.

Auch beim eigentlichen Meßvorgang ist ein Stillstand der ersten Abtasteinheit $A_1$ und damit der zweiten Teilscheibe $S_2$ ebenfalls nicht Bedingung. Eine Relativdrehung der ersten Abtasteinheit $A_1$ und damit der zweiten Teilscheibe $S_2$ bezüglich des Gehäuses G hat bei dem eigentlichen Meßvorgang keinen Einfluß auf die Messung, da bei dieser Relativdrehung die bei der Abtastung der zweiten Inkrementalteilung $T_2$ der zweiten Teilscheibe $S_2$ gewonnenen Zählimpulse dem zweiten Eingang des Differenzzählers zugeführt werden, während die bei der Abtastung der ersten Inkrementalteilung $T_1$ der ersten Teilscheibe $S_1$ gewonnenen Zählimpulse für die eigentliche Messung dem ersten Eingang des Differenzzählers zugeleitet werden; die bei dieser Relativbewegung der ersten Abtasteinheit $A_1$ gewonnenen Zählwerte werden den Zählwerten der eigentlichen Messung je nach Drehrichtung der ersten Abtasteinheit $A_1$ additiv oder sutraktiv überlagert. Die Ruhestellung der ersten Abtasteinheit $A_1$ und der zweiten Teilscheibe $S_2$ bezüglich des Gehäuses G beim eigentlichen Meßvorgang ist damit beliebig, so daß ein mechanischer Anschlag im Gehäuse G für die erste Abtasteinheit $A_1$ zur reproduzierbaren Positionierung der Abtasteinheit $A_1$ nach einem Eichvorgang oder einem Reproduktionsvorgang nicht erforderlich ist; ein solcher Anschlag ist zudem verschleißbehaftet.

In besonders einfacher Ausgestaltung sind auf der ersten Teilscheibe $S_1$ nur eine erste Referenzmarke $R_1$ und auf der zweiten Teilscheibe $S_2$ nur eine zweite Referenzmarke $R_2$ vorgesehen; die beiden Referenzmarken $R_1$, $R_2$ stellen jeweils den Teilungsnullpunkt der beiden Inkrementalteilungen $T_1$, $T_2$ dar und bedürfen keiner Codierung durch Codemarken, so daß sich die Herstellung der beiden Teilscheiben $S_1$, $S_2$ vereinfacht.

Der beim Eichvorgang oder beim Reproduktionsvorgang im Differenzzähler ermittelte Zählwert für den Abstand zwischen der ersten Referenzmarke $R_1$ und der zweiten Referenzmarke $R_2$ stellt in diesem Fall direkt den absoluten Positionswert dar, den die erste Teilscheibe $S_1$ zum Gehäuse G momentan einnimmt.

Die Drehung der ersten Abtasteinheit $A_1$ erfolgt für den Eichvorgang oder den Reproduktionsvorgang wegen der mit der ersten Beleuchtungseinheit $B_1$ und den ersten Photoelementen $P_1$ verbundenen elektrischen Leitungen E über einen Schwenkbereich, der etwas größer als ein Vollkreis ist und zwar abwechselnd in beide Drehrichtungen. Dieser Reversierbetrieb ermöglicht zwischen einzelnen Arbeitsabläufen beispielsweise programmgesteuerte Überprüfungen der jeweiligen Bezugspositionen.

In nicht dargestellter Weise kann die Stromversorgung der ersten Beleuchtungseinheit $B_1$ und

der ersten Photoelemente $P_1$ statt durch die elektrischen Leitungen E auch durch Schleifringe erfolgen. In diesem Falle kann die erste Abtasteinheit $A_1$ mitsamt der zweiten Teilscheibe $S_2$ ohne Reversiergetriebe Z in nur einer Drehrichtung um beliebig viele Umdrehungen gedreht werden.

Die Erfindung ist sowohl bei Winkelmeßeinrichtungen als auch bei Längenmeßeinrichtungen einsetzbar und zwar außer bei der beschriebenen lichtelektrischen Meßeinrichtung beispielsweise auch bei magnetischen, induktiven und kapazitiven Meßeinrichtungen.

**Patentansprüche**

1. Positionsmeßeinrichtung zur Messung der Relativlage zweier zueinander beweglicher Objekte ($O_1$, $O_2$) bei der eine mit wenigstens einer Referenzmarke ($R_{1i}$) versehenen Teilung ($T_1$) eines mit dem ersten Objekt ($O_1$) verbundenen Teilungsträgers ($S_1$) von einer Abtasteinheit ($A_1$) abtastbar ist, gekennzeichnet durch folgende Merkmale zum Reproduzieren einer Bezugsposition nach unterbrochener Messung und Bewegung bei beliebiger unbekannter Momentanposition der zu messenden Objekte ($O_1$, $O_2$) zueinander:

a) eine erste Abtasteinheit ($A_1$) zum Abtasten einer mit wenigstens einer ersten Referenzmarke ($R_{11}$) versehenen ersten Teilung ($T_1$) eines ersten Teilungsträgers ($S_1$) ist mit einem zweiten Teilungsträger ($S_2$) fest verbunden, der eine mit wenigstens einer zweiten Referenzmarke ($R_{2i}$) versehene zweite Teilung ($T_2$) aufweist;

b) zum Abtasten der mit der wenigstens einen zweiten Referenzmarke ($R_{2i}$) versehenen zweiten Teilung ($T_2$) ist eine zweite Abtasteinheit ($A_2$) fest mit dem zweiten Objekt ($O_2$) verbunden;

c) zum Abtasten der wenigstens einen ersten Referenzmarke ($R_{1i}$) des ersten Teilungsträgers ($S_1$) und zum Abtasten der wenigstens einen zweiten Referenzmarke ($R_{2i}$) des zweiten Teilungsträgers ($S_2$) durch die zweite Abtasteinheit ($A_2$) ist die erste Abtasteinheit ($A_1$) zusammen mit dem zweiten Teilungsträger ($S_2$) relativ zum ersten Teilungsträger ($S_1$) und relativ zum zweiten Objekt ($O_2$) verstellbar,
so daß der Verstellweg der ersten Abtasteinheit ($A_1$) und des zweiten Teilungsträgers ($S_2$) als Abstand zwischen der ersten Referenzmarke ($R_{1i}$) und der zweiten Referenzmarke ($R_{2i}$) gemessen werden kann.

2. Meßeinrichtung nach Anspruch 1, wobei der zweite Teilungsträger ($S_2$) in Form einer zweite Teilscheibe konzentrisch zum ersten Teilungsträger ($S_1$) in Form einer ersten Teilscheibe drehbar gelagert und mitsamt der ersten Abtasteinheit ($A_1$) mittels eines Antriebes (M, Z) verdrehbar ist.

3. Meßeinrichtung nach Anspruch 1, wobei den ersten Referenzmarken ($R_{1i}$) jeweils erste Codemarken ($C_{1i}$) und den zweiten Referenzmarken ($R_{2i}$) jeweils zweite Codemarken ($C_{2i}$) zugeordnet sind und wobei die Codemarken ($C_{1i}$, $C_{2i}$) die absoluten Positionswerte der zugehörigen Referenzmarken ($R_{1i}$, $R_{2i}$) in verschlüsselter Form enthalten.

4. Meßeinrichtung nach Anspruch 3, wobei die Referenzmarken ($R_{1i}$, $R_{2i}$) jeweils aus einer Strichgruppe mit einer bestimmten unregelmäßigen Strichverteilung bestehen.

5. Meßeinrichtung nach Anspruch 2, wobei der Antrieb aus einem Motor (M) und aus einem Reversiergetriebe (Z) besteht.

**Claims**

1. Position measuring device for measuring the relative position of two objects ($O_1$, $O_2$) movable with respect to one another, in which a graduation ($T_1$) provided with at least one reference mark ($R_{1i}$) of a graduation carrier ($S_1$) connected to the first object ($O_1$) can be sensed by a sensing unit ($A_1$), characterized by the following features for reproducing a reference position after interrupted measurement and movement with arbitrary unknown instantaneous position of the objects ($O_1$, $O_2$) to be measured with respect to one another:

a) a first sensing unit ($A_1$) for sensing a first graduation ($T_1$) provided with at least one first reference mark ($R_{1i}$) is fixedly connected to a second graduation carrier ($S_2$), which comprises a second graduation ($T_2$) provided with at least one second reference mark ($R_{2i}$);

b) a second sensing unit ($A_2$) for sensing the second graduation ($T_2$) provided with at least one second reference mark ($R_{2i}$) is fixedly connected to the second object ($O_2$);

c) for sensing the at least one first reference mark ($R_{1i}$) of the first graduation carrier ($S_1$) and for sensing the at least one second reference mark ($R_{2i}$) of the second graduation carrier ($S_2$) by the second sensing unit ($A_2$) the first sensing unit ($A_1$) together with the second graduation carrier ($S_2$) is adjustable relative to the first graduation carrier ($S_1$) and relative to the second object ($O_2$),
so that the adjustment path of the first sensing unit ($A_1$) and of the second graduation carrier ($S_2$) can be measured as the distance between the first reference mark ($R_{1i}$) and the second reference mark ($R_{2i}$).

2. Measuring device according to claim 1, wherein the second graduation carrier ($S_2$) in the form of a second graduated disc is rotatably mounted concentric with the first graduation carrier ($S_1$) in the form of a first graduated disc and is rotatable together with the first sensing unit ($A_1$) by means of a drive (M, Z).

3. Measuring device according to claim 1, wherein there are associated with the first reference mark ($R_{1i}$) respective first code marks ($C_{1i}$) and with the second reference marks ($R_{2i}$) respective second code marks ($C_{2i}$) and wherein the code marks ($C_{1i}$, $C_{2i}$) contain the absolute position values of the associated reference marks ($R_{1i}$, $R_{2i}$) in coded form.

4. Measuring device according to claim 3, wherein the reference marks ($R_{1i}$, $R_{2i}$) each consist of a group of strokes with a predetermined irregular stroke distribution.

5. Measuring device according to claim 2, wherein the drive consists of a motor (M) and a reversing gear (Z).

**Revendications**

1. Dispositif de mesure de position pour mesurer la position relative de deux objets $(O_1, O_2)$ mobiles l'un par rapport à l'autre, dans lequel une graduation $(T_1)$ portée par un support de graduation $(S_1)$ relié au premier objet $(O_1)$ et munie d'au moins une marque de référence $(R_{1i})$ peut être explorée par une unité d'exploration $(A_1)$, caractérisé par les caractéristiques suivantes pour la reproduction d'une position de référence, après interruption de la mesure et du mouvement, à une position momentanée inconnue quelconque des objets $(O_1, O_2)$ l'un par rapport à l'autre:

a) une première unité d'exploration $(A_1)$ pour l'exploration d'une première graduation $(T_1)$ portée par un premier support de graduation $(S_1)$ et munie d'au moins une première marque de référence $(R_{1i})$ est reliée rigidement à un second support de graduation $(S_2)$ qui présente une seconde graduation $(T_2)$ munie d'au moins une seconde marque de référence $(R_{2i})$;

b) pour l'exploration de la seconde graduation $(T_2)$ munie d'au moins une seconde marque de référence $(R_{2i})$, une seconde unité d'exploration $(A_2)$ est reliée rigidement au second objet $(O_2)$;

c) pour l'exploration de la première marque de référence $(R_{1i})$ du premier support de graduation $(S_1)$ et pour l'exploration de la seconde marque de référence $(R_{2i})$ du second support de graduation $(S_2)$ par la seconde unité d'exploration $(A_2)$, la première unité d'exploration $(A_1)$ est déplaçable, conjointement avec le second support de graduation $(S_2)$, par rapport au premier support de graduation $(S_1)$ et par rapport au second objet $(O_2)$ de telle manière que le trajet de déplacement de la première unité d'exploration $(A_1)$ et du second support de graduation $(S_2)$ puisse être mesuré en tant que distance entre la première marque de référence $(R_{1i})$ et la seconde marque de référence $(R_{2i})$.

2. Dispositif de mesure suivant la revendication 1, dans lequel le second support de graduation $(S_2)$ réalisé sous la forme d'un second disque gradué est monté en rotation concentriquement au premier support de graduation $(S_1)$ réalisé sous forme d'un premier disque gradué et peut être déplacé angulairement conjointement avec la première unité d'exploration $(A_1)$ à l'aide d'un système d'entraînement (M, Z).

3. Dispositif de mesure suivant la revendication 1, dans lequel des premières marques codées $(C_{1i})$ sont associées aux premières marques de référence $(R_{1i})$ et des secondes marques codées $(C_{2i})$ sont associées aux secondes marques de référence $(R_{2i})$, les marques codées $(C_{1i}, C_{2i})$ contenant sous forme codée les valeurs de position absolue des marques de référence associées $(R_{1i}, R_{2i})$.

4. Dispositif de mesure suivant la revendication 3, dans lequel les marques de référence $(R_{1i}, R_{2i})$ sont constituées chacune d'un groupe de traits avec une répartition irrégulière déterminée des traits.

5. Dispositif de mesure suivant la revendication 2, dans lequel le système d'entraînement se compose d'un moteur (M) et d'une transmission reversible (Z).

**Fig.1**

$S_1$

$T_1$

$R_{11}$

$C_{11}$

$R_{12}$   $C_{12}$

$R_{1i}$

$C_{1i}$

$S_1$

*Fig.2*

$S_2$

$T_2$

$R_{21}$

$C_{21}$

$R_{22}$   $C_{22}$

$R_{2i}$

$C_{2i}$

$S_2$

*Fig.3*

9